**Europäisches Patentamt**

**European Patent Office**

**Office européen des brevets**

(19)

(11) Veröffentlichungsnummer : **0 390 873 B1**

# (12) EUROPÄISCHE PATENTSCHRIFT

(45) Veröffentlichungstag der Patentschrift :
**20.05.92 Patentblatt 92/21**

(51) Int. Cl.$^5$ : **B29B 13/10, B29C 47/10**

(21) Anmeldenummer : **89901992.1**

(22) Anmeldetag : **03.02.89**

(86) Internationale Anmeldenummer :
**PCT/AT89/00009**

(87) Internationale Veröffentlichungsnummer :
**WO 89/07042 10.08.89 Gazette 89/18**

(54) **VORRICHTUNG ZUM AUFBEREITEN VON THERMOPLASTISCHEM KUNSTSTOFFGUT.**

(30) Priorität : **05.02.88 AT 235/88**

(43) Veröffentlichungstag der Anmeldung :
**10.10.90 Patentblatt 90/41**

(45) Bekanntmachung des Hinweises auf die
Patenterteilung :
**20.05.92 Patentblatt 92/21**

(84) Benannte Vertragsstaaten :
**AT BE CH DE FR GB IT LI LU NL SE**

(56) Entgegenhaltungen :
**EP-A- 0 123 771
DE-A- 1 903 834
DE-A- 2 520 244
DE-U- 8 600 021
FR-A- 1 570 874
FR-A- 2 194 132
FR-A- 2 207 764
FR-A- 2 235 775
FR-A- 2 380 814
US-A- 3 335 462**

(73) Patentinhaber : **EREMA Engineering Recycling
Maschinen und Anlagen Gesellschaft m.b.H.
Unterfeldstrasse 3 Freindorf
A-4052 Ansfelden-Linz (AT)**

(72) Erfinder : **BACHER, Helmut
Mittelpromenade 6
A-4040 Puchenau (AT)**
Erfinder : **SCHULZ, Helmuth
Enzing 19
A-4090 St. Florian (AT)**
Erfinder : **WENDELIN, Georg
Am Hartmayrgut 5
A-4040 Linz (AT)**

(74) Vertreter : **Brauneiss, Leo et al
Patentanwälte Dipl.-Ing. Leo Brauneiss,
Dipl.-Ing. Dr. Helmut Wildhack Landstrasser
Hauptstrasse 50 Postfach 281
A-1031 Wien (AT)**

EP 0 390 873 B1

Jouve, 18, rue Saint-Denis, 75001 PARIS

**Beschreibung**

Die Erfindung bezieht sich auf eine Vorrichtung zum Aufbereiten von thermoplastischem Kunststoffgut, das auf Luftsauerstoff bzw. Luftfeuchtigkeit empfindlich ist, z.B. Polyamide oder Polyester, mit einem Aufnahmebehälter, in dessen Bodenbereich zumindest ein um eine etwa vertikale Achse drehbares, mit auf den Kunststoff einwirkenden Arbeitskanten versehenes Zerkleinerungs- bzw. Mischwerkzeug angeordnet ist, welches den Kunststoff bei der Bearbeitung erwärmt, und mit zumindest einer kontinuierlich betreibbaren Ausbringeschnecke für das zerkleinerte Kunststoffgut, deren Gehäuse an der Eintrittsseite an eine Öffnung in der Seitenwand des Aufnahmebehälters angeschlossen ist, die zumindest annähernd auf der Höhe des Zerkleinerungs- bzw. Mischwerkzeuges liegt.

Derartige Vorrichtungen sind bekannt (EP-A 123 771). Zumeist ist die Ausbringeschnecke eine Plastifizierschnecke bzw. Extruderschnecke, die das von ihr geförderte plastifizierte Kunststoffgut zu einer Extruderdüse führt, an welche eine Form angeschlossen sein kann. Solche Vorrichtungen bewähren sich für die meisten thermoplastischen Kunststoffsorten, jedoch hat es sich gezeigt, daß einige Kunststoffsorten bei der im Aufnahmebehälter durchgeführten Bearbeitung (Mischung bzw. Zerkleinerung) leiden. Untersuchungen haben gezeigt, daß die Ursache dafür ist, daß ein Großteil der mechanischen Energie, welche für die Rotation des Zerkleinerungs- bzw. Mischwerkzeuges eingebracht werden muß, in Wärmeenergie umgewandelt wird, welche in den Kunststoff eingebracht wird. Der Kunststoff wird dabei bis nahe an seinen Schmelzpunkt erwärmt. In diesem Temperaturbereich sind verschiedene Kunststoffsorten, z.B. Polyamide, oxydationsgefährdet, d.h. die Kettenlänge der Kunststoffmoleküle wird reduziert, was nachteilige Veränderungen von Eigenschaften des Kunststoffes, z.B. Farbe, Festigkeit usw. zur Folge haben kann.

Andere Kunststoffarten, z.B. Polyester, sind nahe der Schmelztemperatur besonders empfindlich auf die natürliche Feuchtigkeit der Luft, was ebenfalls einen Abbau der Kettenlänge der Moleküle zur Folge haben kann (hydrolytischer Abbau). Auch hiedurch können nachteilige Veränderungen der Kunststoffeigenschaften auftreten.

Die Erfindung setzt sich zur Aufgabe, diese Nachteile zu vermeiden und eine Vorrichtung der eingangs geschilderten Art so zu verbessern, daß die Behandlung des Kunststoffgutes in der Vorrichtung schonender durchgeführt wird, so daß die Vorrichtung universeller anwendbar wird, da nunmehr auch solche Kunststoffsorten aufbereitet werden können, bei denen dies bisher aus den erwähnten Gründen nicht oder nur unter Inkaufnahme der erwähnten Nachteile möglich war. Die Erfindung löst diese Aufgabe dadurch, daß der Aufnahmebehälter oben durch eine Schleuse für einzubringendes Kunststoffgut zumindest im wesentlichen gasdicht abschließbar ist und daß zur Evakuierung des Innenraumes des Aufnahmebehälter bzw. zur Zuleitung von Schutzgas in diesen Innenraum, an den Aufnahmebehälter zumindest eine Leitung an einer Stelle angeschlossen ist, die höher liegt als der höchste Füllstand im Aufnahmebehälter, wobei diese Leitung an eine Saugpumpe für gasförmiges Medium bzw. an eine Pumpe für ein Schutzgas angeschlossen ist und an die Schleuse eine weitere, zur Pumpe führende Leitung angeschlossen ist. Dies ermöglicht es, den Innenraum des Aufnahmebehälters zu evakuieren, welches Vakuum sich bis in die Ausbringeschnecke fortsetzt, die jedoch über ihre Länge dichtend wirkt, d.h., die mit Kunststoffmaterial gefüllte Schnecke dichtet die Öffnung, über welche sie an den Aufnahmebehälter angeschlossen ist, zumindest im wesentlichen luft- bzw. gasdicht ab, so daß keine Luft durch die gefüllte Ausbringeschnecke in den Aufnahmebehälter eindringen kann. Es ist daher möglich, das im Aufnahmebehälter bearbeitete Kunststoffgut im wesentlichen unter Vakuum zu bearbeiten, so daß die erwähnten nachteiligen Eigenschaften, die auf Oxydation bzw. auf einen Einfluß der natürlichen Luftfeuchtigkeit zurückzuführen sind, vermieden werden. Die Evakuierung des Innenraumes des Aufnahmebehälters, in welchem die Zerkleinerung des Kunststoffgutes stattfindet, bringt auch den Vorteil, daß dann am Kunststoffgut anhaftende Feuchtigkeit schon bei relative niederen Temperaturen verdampft. Wird also z.B. nasses Kunststoffgut in den Aufnahmebehälter eingebracht, so beginnt sofort nach Evakuierung dieses Behälters ein intensiver Trocknungsvorgang. Auch hiedurch wird eine hydrolytische Schädigung des Kunststoffes unterbunden.

Es besteht aber auch die Möglichkeit, fürbesondere Kunststoffsorten den Aufnahmebehälter nicht zu evakuieren, sondern darin eine vorbestimmte Atmosphäre zu erzeugen, z.B eine Schutzgasatmosphäre, die z.B. von einem inerten Gas oder von Stickstoff gebildet sein kann. Eine weitere Anwendungsmöglichkeit der Erfindung besteht in solchen Fällen, in welchen Kunststoffe bearbeitet werden, die bei der Zerkleinerung bzw. der damit verbundenen Erwärmung Gase abspalten, die nicht in die Atmosphäre gelangen sollen, z. B. Treibgas in Polystyrolschaum, wie Fluor-Wasserstoffverbindungen usw. Solche Gase sammeln sich im gasdicht abgeschlossenen Aufnahmebehälter und können daraus abgezogen werden, ohne daß in die Atmosphäre gelangen und umweltbelastend wirken. Gegebenenfalls können die abgezogenen Gase verdichtet und gesammelt werden.

Oben, d.h. im Einbringebereich de zu zerkleinernden Kunststoffmateriales, ist der Aufnahmebehälter durch die Schleuse für das einzubringende Kunststoffgut luft- bzw. gasdicht abgeschlossen, so daß bei der Einbringung des zu behandelnden Kunstsoffgutes in den Aufnahmebehälter nur jene Luft- bzw. Feuchtigkeitsmengen in das Innere des Aufnahmebehälters gelangen, welche in der eingebrachten Charge des Kunstsoffgutes bzw. in der diese Charge enthaltenden Schleusenkammer enthalten sind. Diese Luft- bzw. Feuchtigkeitsmengen können mittels der weiteren, an die Schleuse angeschlossenen Leitung reduziert bzw. gänzlich vermieden werden und es besteht die Möglichkeit schon im Zuge der Einbringung des Kunststoffgutes in die Schleuse eine Vorbehandlung, etwa eine Trocknung durch Evakuierung in der Schleusenkammer zu erzielen. Geeignete Schleusen, welche auch die bisher bei Vorrichtungen der eingangs beschriebenen Art übliche chargenweise Beschickung weiterhin ermöglichen, sind bekannt, z.B. Zellenradschleusen usw.

Aus der FR-A 2 194 132 bzw. der entsprechenden DE-A 2 337 969 ist es bei Vorrichtungen zum Brechen festen Materiales bekannt, an die Brechkammer eine Evakuierungsleitung anzuschließen. Die Zerkleinerung des Materiales in der Brechkammer erfolgt durch Anschleudern dieses Materiales an die Umfangswand der Brechkammer mittels eines Schleudertellers, wobei die Evakuierung der Brechkammer den Zweck hat, die Flugbahn der vom Schleuderteller abgeschleuderten Teilchen in der Brechkammer zu beeinflussen. Zweckmäßig wird das zu brechende material vor dem Einbringen in die Brechkammer gekühlt, um die Aufprallwirkung zu verstärken. Hier dient also die Evakuierung der Kammer, in welcher das eingebrachte Gut behandelt wird, einem anderen Zweck als beim Erfindungsgegenstand und die Kühlung des Materiales läßt keinen Schluß auf die Erfindung zu, bei welcher ja zumindest erwärmtes Material, zumeist sogar in den teigigen Zustand, oft bis nahe an den Schmelzpunkt erwärmtes Kunststoffmaterial vorliegt. Ähnliches gilt für eine bekannte Schneckenstrangpresse mit einer Entgasungseinrichtung (DE-A 2 520 244), bei welcher ein an die Einzugsöffnung einer Plastifizierschnecke angeschlossener Behälter oben durch eine Schleuse für das einzubringende Kunststoffgut gasdicht abschließbar ist und mittels einer Vakuumpumpe evakuierbar ist. Dies dient dem Zweck, einen Luftzutritt in die Plastifizierschnecke von der Beschickungsseite her zu vermeiden. Im Behälter laufen Rührelemente um, welche jedoch keine wesentliche Erwärmung des schon als Pulver bzw. Granulat zugeführten Kunststoffgutes bewirken. Auch hieraus ist daher kein Hinweis darauf zu entnehmen, das im Behälter befindliche, durch die Zerkleinerung bis nahe an seinen Schmelzpunkt erwärmte Kunststoffgut gegen einen Abbau der Molekülkettenlänge zu schützen.

Gemäß einer Weiterbildung der Erfindung ist die Schleuse am oberen Ende des Aufnahmebehalters angeordnet, um dessen ganze Höhe ausnutzen zu können.

Weitere Vorteile lassen sich im Rahmen der Erfindung dadurch erzielen, daß an das Gehäuse der Ausbringeschnecke, vorzugsweise im dem Aufnahmebehälter benachbarten Bereich dieses Gehäuses, eine Begasungsleitung angeschlossen ist. Durch eine solche Leitung läßt sich z.B. ein Schutzgas, etwa Stickstoff, in das Schneckengehäuse einbringen, so daß das dort verarbeitete Kunststoffgut weiterhin unter Schutzgaseinfluß steht und daher bis zum Austritt aus der Schnecke bzw. der an sie angeschlossenen Düse gegen schädigende Einflüsse geschützt ist.

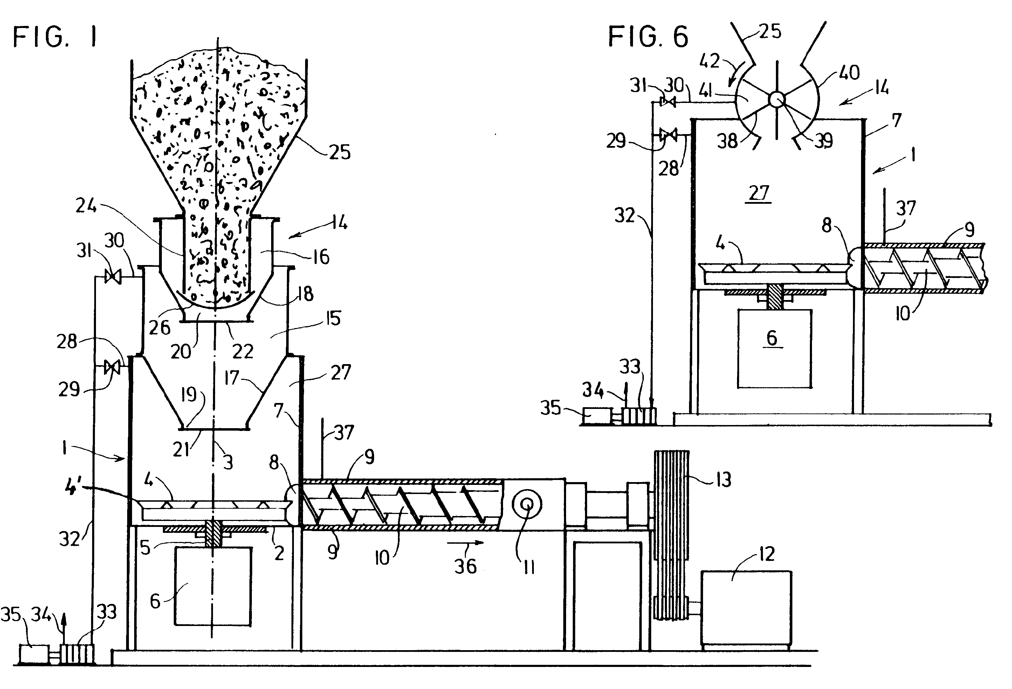

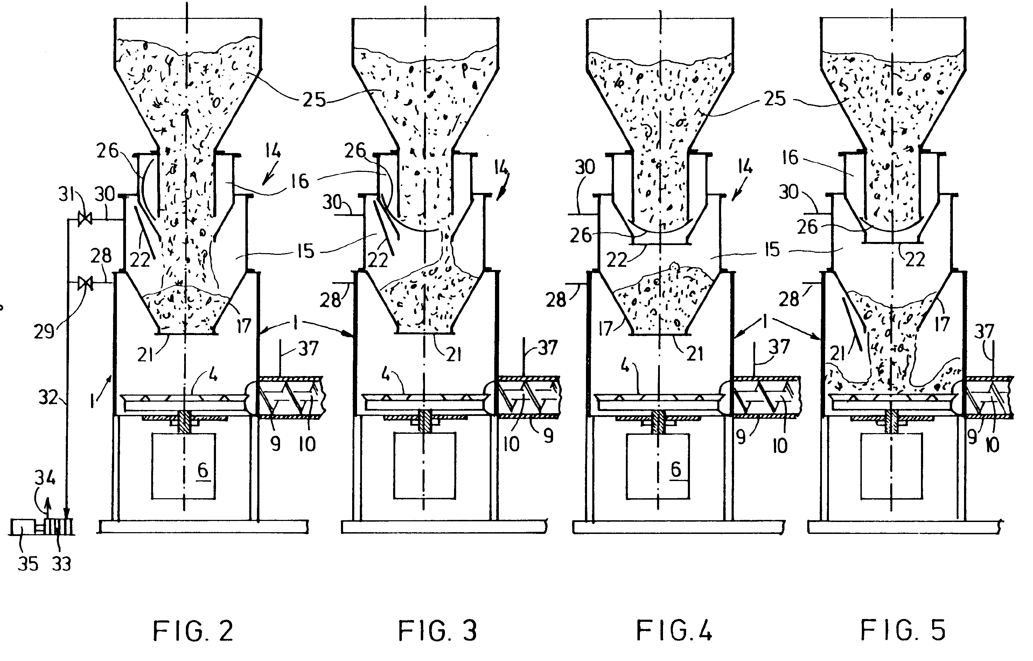

In der Zeichnung sind Ausführungsbeispiele des Erfindungsgegenstandes schematisch dargestellt. Fig.1 zeigt einen Vertikalschnitt durch eine erfindungsgemäße Vorrichtung. Die Fig.2 bis 5 zeigen die im Zusammenhang wesentlichen Teile der Vorrichtung nach Fig.1 in vier aufeinanderfolgenden Betriebsstufen. Fig.6 zeigt ein weiteres Ausführungsbeispiel im Vertikalschnitt.

Die Vorrichtung nach den Fig.1 bis 5 hat einen Aufnahmebehälter 1 für das zu behandelnde Kunststoffgut. Im Bereich des Bodens 2 des Aufnahmebehälters 1 ist ein um eine vertikale Achse 3 drehbares Zerkleinerungs- und Mischwerkzeug 4 vorgesehen, das mit von Messern gebildeten, auf das Kunststoffgut einwirkenden scharfen Arbeitskanten 4 versehen ist und auf einer Welle 5 sitzt, die im Boden 2 gelagert ist und von einem Motor 6 angetrieben wird. Auf der Höhe des Zerkleinerungs- und Mischwerkzeuges 4 ist in der Seitenwand 7 des Aufnahmebehälters 1 eine Öffnung 8 vorgesehen, an die das Gehäuse 9 einer Ausbringeschnecke 10 angeschlossen ist, die eine zu einer seitlich in Bezug auf die Längsachse des Gehäuses 9 angeordneten Extruderdüse 11 führende Extruderschnecke sein kann. Die Ausbringeschnecke 10 wird von einem Motor 12 über einen Keilriementrieb 13 angetrieben.

Das obere Ende des Aufnahmebehälters 1 ist durch eine Schleuse 14 luft- bzw. gasdicht abgeschlossen, die eine untere Schleusenkammer 15 und eine obere Schleusenkammer 16 hat. Die beiden Schleusenkammern 15,16 sind jeweils mit einem trichterartigen Boden 17 bzw.18 versehen, dessen untere Öffnung 19 bzw.20 durch einen Klappdeckel 21 bzw.22 im wesentlichen dicht abschließbar ist. In die obere Abschlußwand der oberen Schleusenkammer 16 ist ein rohrförmiger Einsatz 24 eingesetzt, an den oben ein großräumiger Einfülltrichter 25 für das zu verarbeitende Kunststoffgut angeschlossen ist. Das untere Ende des Einsatzes 24 ist durch einen schwenkbaren Boden 26 abschließbar.

An den Innenraum 27 des Aufnahmebehälters 1 ist an einer möglichst hohen Stelle, jedenfalls höher als der höchste Füllstand im Aufnahmebehälter 1, eine Leitung 28 angeschlossen, in die ein Ventil 29 eingeschaltet ist. Eine ähnliche Leitung 30 ist an die untere Schleusenkammer 15 im obersten Bereich derselben angeschlossen und mit einem Ventil 31 versehen. Die beiden Leitungen 28,30 sind zu einer gemeinsamen Leitung 32 vereinigt und an eine Pumpe 33 angeschlossen. Diese Pumpe 33 kann eine Saugpumpe sein, um aus dem Aufnahmebehälter 1 bzw. aus der unteren Schleusenkammer 15 Luft oder andere gasförmige Medien absaugen zu können. In diesem Fall wird das abgesaugte Medium über eine Leitung 34 aus der Pumpe 33 abgegeben und kann, wenn es sich um nutzbares Gas handelt, in einem nicht dargestellten Behälter gesammelt, verdichtet und danach gegebenenfalls einer Wiederverwendung zugeführt werden. Die Pumpe 33 ist durch einen Motor 35 angetrieben.

Die Pumpe 33 kann jedoch auch eine Förderpumpe sein und z.B. ein Schutzgas, welches über die Leitung 34 der Pumpe 33 zugeführt wird, in die Leitung 32 eindrücken. Je nachdem, welches der Ventile 29,31 geöffnet ist, kann dieses Schutzgas in den Aufnahmebehälter 1 und/oder in die untere Schleusenkammer 15 eingeblasen werden. Es kann jedoch auch, falls gewünscht, im Innenraum 27 des Aufnahmebehälters 1 eine andere Atmosphäre erzeugt bzw. aufrechterhalten werden als in der unteren Schleusenkammer 15. Beispielsweise ist es möglich, in der unteren Schleusenkammer 15 durch eine Evakuierung eine Vortrocknung des eingebrachten Gutes vorzunehmen und dieses dann im Aufnahmebehälter 1 in einer Schutzgasatmospähre zu halten, oder umgekehrt.

Die Ausbringeschnecke 10 ist mit in ihrer Förderrichtung (Pfeil 36) abnehmender Gangtiefe ausgebildet. Dies trägt dazu bei, daß sich der Druck auf das in der Schnecke befindliche Kunststoffgut gegen die Extruderdüse 11 zu verstärkt. Dies bewirkt nicht nur eine gute Plastifizierung des Kunststoffgutes, sondern sichert zugleich eine Gasdichtheit im Gehäuse 9, so daß durch dieses Gehäuse 9 weder Luft von außen in den Aufnahmebehälter eindringen kann, noch in diesem befindliches Schutzgas durch die Öffnung 8 entweichen kann.

Die Vorrichtung arbeitet wie folgt (Fig.1 bis 5):

Die Ausgangsstellung ist in Fig.1 dargestellt, in welcher der Einfülltrichter 25 und der Einsatz 24 mit dem zu verarbeitenden Kunststoffgut gefüllt sind. Zunächst wird der Klappdeckel 22 und der Boden 26 so verschwenkt, daß das Kunststoffgut aus dem Einsatz 24 in die untere Schleusenkammer 15 fallen kann (Fig.2). Sodann wird, wenn sich eine genügend große Charge des zu verarbeitenden Kunststoffgutes in der unteren Schleusenkammer 15 befindet, der Boden 26 des Einsatzes 24 wieder in seine Schließstellung überführt (Fig.3). Ist diese schließstellung erreicht (Fig.4), so hört der Zustrom von Kunststoffgut in die untere Schleusenkammer 15 auf und es kann diese Schleusenkammer 15, falls gewünscht, über die Leitung 30 nach Öffnung des Ventiles 31 entweder evakuiert oder mit einem Schutzgas begast werden. Zweckmäßig schließt hiebei der Klappdeckel 22 die Öffnung 20 luft- bzw. gasdicht. Sodann wird der Klappdeckel 21 in seine Öffnungslage verschwenkt (Fig.5), wodurch das in der unteren Schleusenkammer 15 befindliche Kunststoffgut in den Innenraum 27 des Aufnahmebehälters 1 fällt. Sobald die untere Schleusenkammer 15 entleert ist, wird der Klappdeckel 21 wieder geschlossen und es ist die Ausgangslage nach Fig.1 wieder erreicht. Das nunmehr im Aufnahmebehälter 1 befindliche Kunststoffgut kann nun durch das rotierende Zerkleinerungsund Mischwerkzeug 4 bearbeitet und dabei erwärmt werden. Die Öffnung 8 ist auf der Höhe dieses Werkzeuges 4 angeordnet, so daß die vom Werkzeug 4 auf das verarbeitete Kunststoffgut ausgeübte Fliehkraftkomponente eine Befüllung des Schneckengehäuses 9 unterstützt, wenn dieses, was bevorzugt ist, zumindest annähernd radial in Bezug auf die Achse 3 angeordnet ist. Dieser Effekt kann noch dadurch gesteigert werden, daß das Zerkleinerungs- und Mischwerkzeug 4 mit Arbeitskanten 4′ seiner Werkzeuge versehen ist, welche in Drehrichtung zurückgesetzt verlaufen, wodurch zusätzlich zur Fliehkraftkomponente eine spachtelartige Druckkomponente entsteht. Die Schnecke 10 und ihr Gehäuse 9 haben keine in den Innenraum des Aufnahmebehälters 1 vorragenden Teile, so daß die umlaufende Bewegung des Zerkleinerungs- und Mischwerkzeuges nicht behindert wird und keine toten Ecken für das zu verarbeitende Kunststoffgut entstehen.

Die Betätigungsmechanismen für die Klappdeckel 21, 22 und den Boden 26 können an sich bekannter Art sein und brauchen daher nicht im einzelnen beschrieben zu werden. Die Welle 5 muß zumindest im wesentlichen gasdicht durch den Boden 2 hindurchgeführt bzw. gelagert sein.

In das Gehäuse 9 der Ausbringeschnecke 10 kann nahe der Öffnung 8 eine Leitung 37 einmünden, durch welche zusätzlich ein Schutzgas, z.B. Stickstoff, in das Innere des Gehäuses 9 eingeführt werden kann.

Die Ausführungsform nach Fig.6 unterscheidet sich von jener nach den Fig.1 bis 5 lediglich durch die Bauart der Schleuse 14, welche gemäß Fig.6 eine Zellenradschleuse ist, deren Zellenrad 38 um eine horizontale Achse 39 drehbar gelagert ist. Die Flügel des Zellenrades 38 liegen im wesentlichen luftdicht an der Gehäusewand 40 an, so daß stets zumindest eine zwischen zwei einander benachbarten Flügeln des Zellenrades 38 befindliche Zelle 41 luftdicht abgeschlossen ist. Das Zellenrad 38 läuft in Richtung des Pfeiles 42 um und an den Innenraum der Zellenradschleuse ist die Leitung 30 angeschlossen. Eine geeignete Steuerung sorgt dafür, daß nach Passieren des Flügels an der Leitung 30 durch diese eine Begasung oder Evakuierung der betreffenden Zelle 41 erfolgt, wenn dies gewünscht ist. Die Evakuierung des Innenraumes 27 des Aufnahmebehälters 1 kann ansonsten wie in Fig.1 beschrieben, über die Leitungen 28, 32 bzw. das Ventil 29 erfolgen.

Die Erfindung ist auch auf solche Vorrichtungen anwendbar, bei welchen im Aufnahmebehälter mehr als ein rotierendes Zerkleinerungs- und Mischwerkzeug angeordnet ist. So sind Kunststoffaufbereitungsmaschinen bekannt, die zwei voneinander in Abstand um zwei parallele Achsen umlaufende Zerkleinerungs- und Mischwerkzeuge aufweisen, deren Umlaufbahnen einander überschneiden, wobei der Horizontalquerschnitt des Aufnahmebehälters biskottenförmig ist. Insbesondere bei solchen Vorrichtungen, aber auch bei andergearteter Vorrichtungen, können auch mehrere Ausbringeschnecken vorgesehen sein. Wenngleich die beschriebene radiale Anordnung der Ausbringeschnecken aus Gründen einer günstigen Befüllung die günstigste ist, so wären auch Ausführungen denkbar, bei welchen die Ausbringeschnecke tangential angeordnet ist, wobei auch auf einer gemeinsamen Welle zwei mit unterschiedlicher Förderrichtung arbeitende Schnecken angeordnet sein können, so daß die Ausbringung des Kunststoffgutes aus dem Aufnahmebehälter nach zwei verschiedenen Richtungen erfolgt, wobei die Eintrittsöffnung für das Schneckengehäuse zwischen diesen beiden Schnecken liegt.

## Patentansprüche

1. Vorrichtung zum Aufbereiten von thermoplastischem Kunststoffgut, das auf Luftsauerstoff bzw. Luftfeuchtigkeit empfindlich ist, z.B. Polyamide oder Polyester, mit einem Aufnahmebehälter (1), in dessen Bodenbereich zumindest ein um eine etwa vertikale Achse (3) drehbares, mit auf den Kunststoff einwirkenden Arbeitskanten versehenes Zerkleinerungs- bzw. Mischwerkzeug (4) angeordnet ist, welches den Kunststoff bei der Bearbeitung erwärmt, und mit zumindest einer kontinuierlich betreibbaren Ausbringeschnecke (10) für das zerkleinerte Kunststoffgut, deren Gehäuse (9) an der Eintrittsseite an eine Öffnung (8) in der Seitenwand (7) des Aufnahmebehälters (1) angeschlossen ist, die zumindest annähernd auf der Höhe des Zerkleinerungs- bzw. Mischwerkzeuges (4) liegt, dadurch gekennzeichnet, daß der Aufnahmebehälter (1) oben durch eine Schleuse (14) für einzubringendes Kunststoffgut zumindest im wesentlichen gasdicht abschließbar ist und daß zur Evakuierung des Innenraumes (27) des Aufnahmebehälters (1) bzw. zur Zuleitung von Schutzgas in diesen Innenraum, an den Aufnahmebehälter (1) zumindest eine Leitung (28) an einer Stelle angeschlossen ist, die höher liegt als der höchste Füllstand im Aufnahmebehälter (1), wobei diese Leitung (28) an eine Saugpumpe (33) für gasförmiges Medium bzw. an eine Pumpe für ein Schutzgas angeschlossen ist und an die Schleuse (14) eine weitere, zur Pumpe (33) führende Leitung (30) angeschlossen ist.

2. Vorrichtung nach Anspruch 1, dadurch gekennzeichnet, daß die Schleuse (14) am oberen Ende des Aufnahmebehälters (1) angeordnet ist.

3. Vorrichtung nach Anspruch 1 oder 2, dadurch gekennzeichnet, daß an das Gehäuse (9) der Ausbringeschnecke (10), vorzugsweise im den Aufnahmebehälter (1) benachbarten Bereich dieses Gehäuses (9), eine Begasungsleitung (37) angeschlossen ist.

## Claims

1. A device for processing thermoplastic plastic material which is sensitive to atmospheric oxygen or atmospheric moisture, e.g. polyamides or polyesters, comprising a receiving vessel (1), in the base region of which there is disposed at least one comminuting or mixing implement (4), rotatable about an approximately vertical axis (3) and provided with working edges which act on the plastic, which implement heats up the plastic during processing, and comprising at least one continuously operable output screw conveyor (10) for the comminuted plastic material, the housing (9) of which is connected on the entry side to an opening (8) in the side wall (7) of the receiving vessel (1) which is situated at least approximately at the level of the comminuting or mixing implement (4), characterised in that the receiving vessel (1) is sealable at the top in at least substantially gastight manner by a charging valve (14) for the plastic material to be introduced, and in that in order to evacuate the interior space (27) of the receiving vessel (1) or to supply protective gas into this interior space, at least one pipeline (28) is connected to the receiving vessel (1) at a point higher than the maximum filling level in the receiving vessel (1), this pipeline (28) being connected to a suction pump (33) for a gaseous medium or to a pump for a protective gas, and a further pipeline (30) which leads to the pump (33) being connected to the charging valve (14).

2. A device according to claim 1, characterised in that the charging valve (14) is disposed at the top end of the receiving vessel (1).

3. A device according to claim 1 or 2, characterised in that a gas-supplying pipeline (37) is connected to the housing (9) of the output conveyor screw (10), preferably in the region of this housing (9) adjoining the receiving vessel (1).

## Revendications

1. Dispositif pour la mise en oeuvre de matière thermoplastique sensible à l'oxygène de l'air et/ou à l'humidité de l'air, par exemple le polyamide ou le polyester, avec une cuve de réception (1), au fond de laquelle est disposé au moins un broyeur et/ou mélangeur (4) tournant autour d'un axe (3) à peu près vertical, avec arêtes agissant sur la matière plastique, broyeur et/ou mélangeur chauffant la matière plastique lors du traitement, et avec au moins une vis de sortie (10) à fonctionnement continu pour la matière plastique broyée, vis de sortie dont le fourreau (9) est raccordé sur le côté entrée à une ouverture (8) dans la paroi latérale (7) de la cuve de réception (1), se trouvant au moins approximativement en haut du broyeur et/ou mélangeur (4), dispositif caractérisé en ce que la cuve de réception (1) peut être fermée sur le dessus par une écluse (14) pour la matière plastique à introduire, pouvant au moins être obturée de manière essentiellement étanche aux gaz, et en ce que, pour la mise sous vide de l'intérieur (27) de la cuve de réception (1) et/ou pour l'introduction d'un gaz de protection dans cet intérieur, au moins une conduite (28) est raccordée à la cuve de réception (1), à un emplacement situé plus haut que le niveau le plus haut dans la cuve de réception (1), cette conduite (28) étant raccordée à une pompe aspirante (33) pour le fluide gazeux et/ou à une pompe pour un gaz de protection, et une autre conduite (30) conduisant à la pompe (33) étant raccordée à l'écluse (14).

2. Dispositif suivant revendication 1, caractérisé en ce que l'écluse (14) est disposée à l'extrémité supérieure de la cuve de réception (1).

3. Dispositif suivant revendication 1 ou 2, caractérisé en ce qu'une conduite d'arrivée de gaz (37) est raccordée au fourreau (9) de la vis de sortie (10), de préférence dans la zone de ce fourreau (9) voisine de la cuve de réception (1).

FIG. 6

FIG. 1

EP 0 390 873 B1

FIG. 2　　　FIG. 3　　　FIG.4　　　FIG. 5